# EUROPEAN PATENT SPECIFICATION

(11) **EP 4 268 647 B1**
(45) Date of publication and mention of the grant of the patent: **18.12.2024**
(21) Application number: 23168982.9
(22) Date of filing: 20.04.2023
(51) Int. Cl.: A41D 13/018, A41D 13/05, B62J 27/00

(54) **PERSONAL PROTECTION DEVICE, PARTICULARLY FOR PROTECTING THE BACKBONE WHILE PERFORMING SPORTS ACTIVITIES**
PERSÖNLICHE SCHUTZVORRICHTUNG, INSBESONDERE ZUM SCHUTZ DES RÜCKGRATES BEI SPORTLICHEN AKTIVITÄTEN
DISPOSITIF DE PROTECTION PERSONNELLE, EN PARTICULIER POUR PROTÉGER LA COLONNE VERTÉBRALE PENDANT LA RÉALISATION D'ACTIVITÉS SPORTIVES

(30) Priority: 29.04.2022 IT 202200008558
(43) Date of publication of application: 01.11.2023
(73) Proprietor: Lomboni, Maria Pia, 20141 Milano (IT)
(72) Inventor: Lomboni, Maria Pia, 20141 Milano (IT)
(74) Representative: Modiano, Micaela Nadia

(56) References cited:
- FR-A1- 3 031 880
- IT-A1- 201900 006 880
- US-A1- 2009 055 053
- US-A1- 2011 237 194
- US-B2- 10 300 975

## Description

The present invention relates to a personal protection device, particularly for protecting the backbone while performing sports activities.

In the field of sports equipment, particularly in the field of cycling and the like, various devices are known for the physical protection of the practicing sportsperson depending on the discipline practiced.

US 2009/055053 discloses a garment having an airbag within the garment for protecting the upper body of the wearer, including the spine. The deployment of the airbag occurs in response to a signal from the vehicle representing the riding angle of the vehicle relative to a vertical orientation.

FR 3031880 discloses a cyclists's garment with incorporated inflatable cushions to protect the wearer.

Inspired by devices for motorcycling use that use airbag technology, particular personal protection devices have been developed which substantially consist of vests provided with a bag which can inflate following the ignition of a compressed air explosive charge.

These devices of the known type are not without drawbacks, which include the fact that they offer limited comfort and are scarcely practical.

In fact, not only they can be a hindrance to the practice of sports because of their shape, but they exploit a mechanical actuation consisting of a cord that connects the device to the bicycle and that triggers the ignition of the explosive charge only as a result of its forceful pulling.

It is easy to see how this type of actuation brings with it unavoidable limitations, the first of which is the fact of having a cord that can get in the way during sports action and the fact that it can lead to failed ignitions of the explosive charge for example if, in the event of a fall, the user does not separate from the bicycle to such an extent that the cord is pulled forcefully.

The aim of the present invention is to provide a personal protection device, particularly for protecting the backbone while performing sports activities, that overcomes the limitations and drawbacks mentioned above.

This aim and other objects which will become better apparent hereinafter are achieved by a personal protection device, particularly for protecting the backbone of a user while performing sports activities, comprising:
- at least one inflatable bag that has a substantially elongated geometric shape so that it can be at least partially removably inserted in a central rear pocket of a cycling shirt at an end thereof so as to protect the backbone of the user wearing said cycling shirt provided with said personal protection device;
- at least one compressed air explosive charge associated with said at least one inflatable bag so that it too is removably accommodated in said central rear pocket and is adapted for the inflation of said at least one inflatable bag as a consequence of its ignition;
- -a central electronic management and control unit which is functionally connected with said at least one explosive charge and with sensor means adapted to measure the dynamic and kinematic parameters of said user and of a bicycle used by said user; said central electronic management and control unit being adapted to compare said dynamic parameters for a controlled ignition of said at least one explosive charge and said sensor means being partially associable with said user and partially associable with said bicycle.

Further characteristics and advantages of the present invention will become better apparent from the description of two preferred but not exclusive embodiments of a personal protection device, particularly for protecting the backbone while performing sports activities, illustrated by way of non-limiting example with the aid of the accompanying drawings, wherein:
Figure 1 is a perspective view of a first embodiment of a personal protection device according to the present invention;
Figure 2 is a perspective view of a second embodiment of a personal protection device according to the invention.

With reference to the figures, the personal protection device, particularly for protecting the backbone of the user while performing sports activities, is designated in the two illustrated embodiments by the reference numerals 1a and 1b and comprises:
- at least one inflatable bag 2, which has a substantially elongated geometric shape so that it can be at least partially removably inserted in a central rear pocket 3 of a cycling shirt 4 at an end thereof so as to protect the backbone of a user 5 wearing the cycling shirt 4 provided with the personal protection device 1a or 1b; and
- at least one compressed air explosive charge 6 associated with the inflatable bag 2 so that it too is removably accommodated in the central rear pocket 3 and is suitable for the inflation of the inflatable bag 2 as a consequence of its ignition.

In the illustrated embodiments, the inflatable bag 2 is provided optionally with lateral protrusions 7 which are formed at the end that is opposite with respect to the end designed to be inserted in the central rear pocket 3 and are adapted to protect the shoulders of the user 5.

Such lateral protrusions 7 can be fixed to the shirt 4 of the user 5 for example by means of Velcro^{®}.

According to the invention, the personal protection devices 1a and 1b comprise a central electronic management and control unit 8 which is functionally connected with the explosive charge 6 and with sensor means adapted to measure the dynamic and kinematic parameters of the user 5 and of a bicycle 9 used by said user.

In greater detail, the central electronic management and control unit 8 is adapted to compare the dynamic parameters for the controlled ignition of the explosive charge 6 and the sensor means are partially associable with the user 5 and partially associable with the bicycle 9.

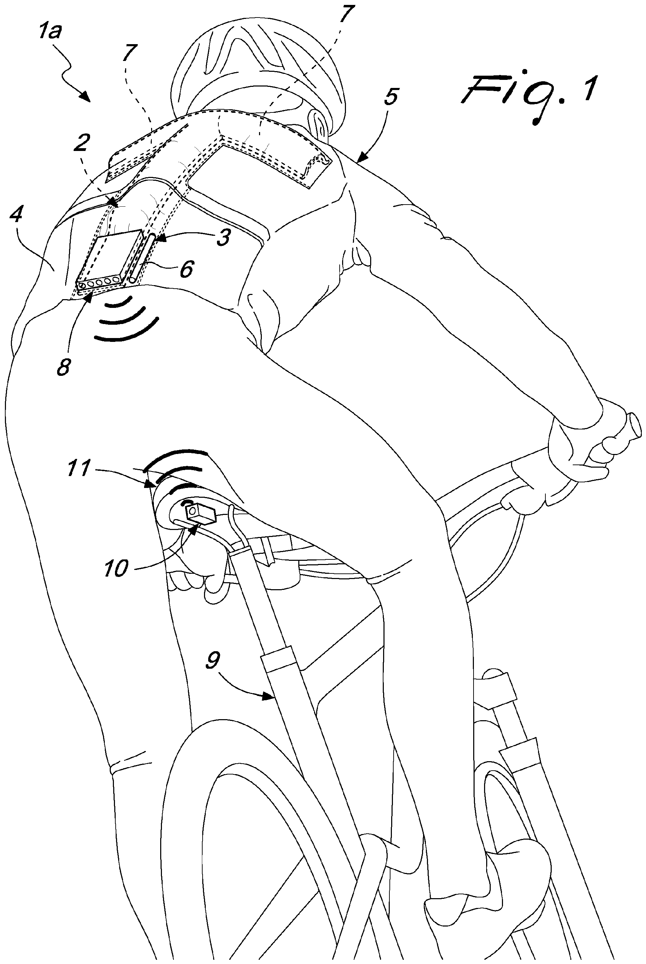

With particular reference to the first embodiment 1a, shown in Figure 1, the central electronic management and control unit 8 is physically associated with the inflatable bag 2 for its arrangement in the central rear pocket 3 and the sensor means comprise at least two accelerometers, of which a first accelerometer is associated directly with the inflatable bag 2, for example by being integrated in the central electronic management and control unit 8, and a second accelerometer 10 is associable with the saddle 11 of the bicycle 9.

Conveniently, at least one of the two accelerometers, i.e., the second accelerometer 10, is functionally associated with the central electronic management and control unit 8 by virtue of wireless telecommunication means.

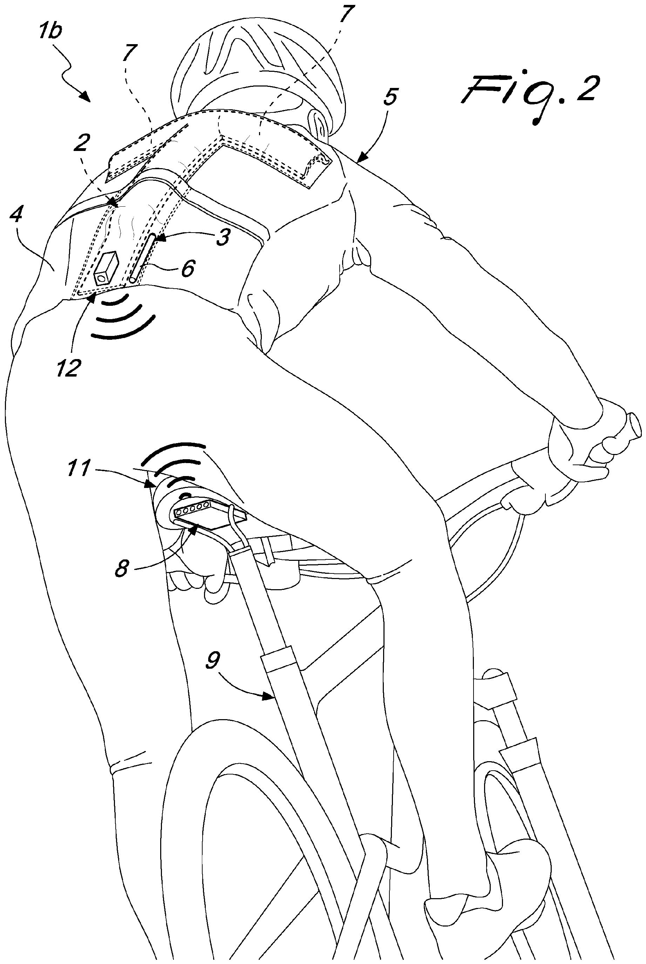

Vice versa, with particular reference to the second embodiment 1b, which is shown in Figure 2, the central electronic management and control unit 8 is associable with the saddle 11 of the bicycle 9 and is functionally associated with the explosive charge 6 by virtue of wireless telecommunication means for the remote ignition of said charge.

In this case, the first accelerometer can be associated with the saddle 11 of the bicycle 9, for example being integrated in the central electronic management and control unit 8, and the second accelerometer 12 is associated directly with the inflatable bag 2 and is functionally associated with the central electronic management and control unit 8 by virtue of wireless telecommunication means.

The operation of the personal protection devices 1a and 1b is easy to understand from what has just been described.

In greater detail, the accelerometer arranged below the saddle 11 is calibrated on zero degrees with the bicycle 9 in a normal position in order to measure:
- deceleration experienced by the bicycle (greater than the maximum braking power);
- lateral tilt (greater than that used when a racer performs a so-called "sprint" on a bicycle);
- vertical tilt (the rear rises, performing a wheelie but with the rear wheel).

Concurrently, the accelerometer is associated with the inflatable bag 2 in order to measure:
- deceleration experienced by the body of the user 5 (greater than the maximum braking power);
- torsion of the trunk of the user 5 (greater than the physiological torsion of movement while pedaling).

The acquisitions thus performed are processed by the central electronic management and control unit 8, which proceeds with the ignition of the explosive charge 6 in a direct or remote manner, depending on the embodiment.

In other words, by virtue of the presence of accelerometers, when there is a fall/jolt off the bicycle, the explosive is activated for the inflation of the inflatable bag 2 in order to protect the backbone and, optionally, also the shoulders of the user 5.

Conveniently, the electronic components of the personal protection devices 1a and 1b are arranged, with respect to the inflatable bag 2, opposite to the body of the user so as not to create a damage in the event of a fall.

In fact, said components are isolated from the body of the user 5 directly by the inflation of the inflatable bag 2.

The personal protection devices 1a and 1b thus conceived are removable from the cycling shirt 4 so that the shirt can be washed.

In practice it has been found that the personal protection device, particularly for protecting the backbone while performing sports activities, according to the present invention, achieves the intended aim and objects.

In particular, it should be highlighted that it can perform its function of personal protection in a comfortable and lightweight manner and without affecting the technical gesture of pedaling, thus being different from known systems.

The personal protection device, particularly for protecting the backbone while performing sports activities, thus conceived is susceptible of numerous modifications and variations, all of which are within the scope of the appended claims.

All the details may furthermore be replaced with other technically equivalent elements.

In practice, the materials used, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A personal protection device (1a, 1b), particularly for protecting the backbone of a user while performing sports activities, comprising:
- at least one inflatable bag (2) that has a substantially elongated geometric shape so that it can be removably at least partially inserted in a central rear pocket (3) of a cycling shirt (4) at an end thereof so as to protect the backbone of the user (5) wearing said cycling shirt (4) provided with said personal protection device (1a, 1b);
- at least one compressed air explosive charge (6) associated with said at least one inflatable bag (2) so that it too is removably accommodated in said central rear pocket (3) and is adapted for the inflation of said at least one inflatable bag (2) as a consequence of its ignition;
a central electronic management and control unit (8) which is functionally connected with said at least one explosive charge (6) and with sensor means adapted to measure the dynamic and kinematic parameters of said user (5) and of a bicycle (9) used by said user (5); said central electronic management and control unit (8) being adapted to compare said dynamic parameters for a controlled ignition of said at least one explosive charge (6) and said sensor means being partially associable with said user (5) and partially associable with said bicycle (9).

2. The personal protection device (1a) according to claim 1, **characterized in that** said central electronic management and control unit (8) is physically associated with said inflatable bag (2) for its arrangement in said central rear pocket (3).

3. The personal protection device (1b) according to claim 1, **characterized in that** said central electronic management and control unit (8) is configured to be associated with the saddle (11) of said bicycle (9) and is functionally associated with said explosive charge (6) by virtue of wireless telecommunication means for the remote ignition of said explosive charge (6).

4. The personal protection device (1a, 1b) according to claim 2 or 3, **characterized in that** said sensor means comprise at least two accelerometers (10, 12), of which a first accelerometer (12) is associated directly with said inflatable bag (2) and a second accelerometer (10) is configured to be associated with said saddle (11) of said bicycle (9), at least one of said accelerometers (10, 12) being functionally associated with said central electronic management and control unit (8) by virtue of wireless telecommunication means.

5. The personal protection device (1a) according to claim 4, **characterized in that** said inflatable bag (2) is provided with lateral protrusions (7) which are formed at the end that is opposite to the end designed to be inserted in said central rear pocket (3) and are adapted to protect the shoulders of said user (5).

## Patentansprüche

1. Eine persönliche Schutzvorrichtung (1a, 1b), insbesondere zum Schutz des Rückgrates eines Benutzers bei sportlichen Aktivitäten, die Folgendes umfasst:
- mindestens eine aufblasbare Tasche (2), die eine im Wesentlichen längliche geometrische Form hat, so dass sie herausnehmbar zumindest teilweise in eine zentrale Rückentasche (3) eines Fahrradhemds (4) an einem Ende desselben eingeführt werden kann, um das Rückgrat des Benutzers (5), der das mit der persönlichen Schutzvorrichtung (1a, 1b) ausgestattete Fahrradhemd (4) trägt, zu schützen;
- mindestens eine Druckluft-Sprengladung (6), verbunden mit der mindestens einen aufblasbaren Tasche (2), so dass auch sie herausnehmbar in der zentralen Rückentasche (3) untergebracht und ausgebildet ist zum Aufblasen der mindestens einen aufblasbaren Tasche (2) infolge ihrer Zündung;
eine zentrale elektronische Verwaltungs- und Steuerungseinheit (8), die funktionell mit der mindestens einen Sprengladung (6) und mit Sensormitteln verbunden ist, die ausgebildet sind, um die dynamischen und kinematischen Parameter des Benutzers (5) und eines von dem Benutzer (5) verwendeten Fahrrads (9) zu messen; wobei die zentrale elektronische Verwaltungs- und Steuerungseinheit (8) ausgebildet ist, um die dynamischen Parameter für eine kontrollierte Zündung der mindestens einen Sprengladung (6) zu vergleichen, und wobei die Sensormittel teilweise mit dem Benutzer (5) und teilweise mit dem Fahrrad (9) verbindbar sind.

2. Die persönliche Schutzvorrichtung (1a) gemäß Anspruch 1, **dadurch gekennzeichnet, dass** die zentrale elektronische Verwaltungs- und Steuerungseinheit (8) zum Zwecke ihrer Unterbringung in der zentralen Rückentasche (3) physisch mit der aufblasbaren Tasche (2) verbunden ist.

3. Die persönliche Schutzvorrichtung (1b) gemäß Anspruch 1, **dadurch gekennzeichnet, dass** die zentrale elektronische Verwaltungs- und Steuerungseinheit (8) ausgebildet ist, um mit dem Sattel (11) des Fahrrads (9) verknüpft zu werden, und zur Fernzündung der Sprengladung (6) funktionell über drahtlose Telekommunikationsmittel mit der Sprengladung (6) verknüpft ist.

4. Die persönliche Schutzvorrichtung (1a, 1b) gemäß Anspruch 2 oder 3, **dadurch gekennzeichnet, dass** die Sensormittel mindestens zwei Beschleunigungsmesser (10, 12) umfassen, wobei ein erster Beschleunigungsmesser (12) direkt mit der aufblasbaren Tasche (2) verbunden ist und ein zweiter Beschleunigungsmesser (10) ausgebildet ist, um mit dem Sattel (11) des Fahrrads (9) verbunden zu werden; wobei mindestens einer der Beschleunigungsmesser (10, 12) über drahtlose Telekommunikationsmittel funktionell mit der zentralen elektronischen Verwaltungs- und Steuerungseinheit (8) verbunden ist.

5. Die persönliche Schutzvorrichtung (1a) gemäß Anspruch 4, **dadurch gekennzeichnet, dass** die aufblasbare Tasche (2) mit seitlichen Flügeln (7) versehen ist, die an dem Ende geformt sind, das dem Ende gegenüberliegt, welches dazu dient, in die zentrale hintere Tasche (3) eingeführt zu werden; und ausgebildet sind, um die Schultern des Benutzers (5) zu schützen.

## Revendications

1. Dispositif de protection personnelle (1a, 1b), particulièrement pour protéger la colonne vertébrale d'un utilisateur lors de la pratique d'activités sportives, comprenant :
au moins un sac gonflable (2) qui a une forme géométrique sensiblement allongée de telle manière qu'il peut être inséré de manière amovible au moins en partie dans une poche arrière centrale (3) d'un maillot de cyclisme (4) à une extrémité de celle-ci de façon à protéger la colonne vertébrale de l'utilisateur (5) portant ledit maillot de cyclisme (4) pourvu dudit dispositif de protection personnelle (1a, 1b) ;
au moins une charge explosive (6) à air comprimé associée audit au moins un sac gonflable (2) de telle manière qu'elle est aussi logée de manière amovible dans ladite poche arrière centrale (3) et est conçue pour le gonflage dudit au moins un sac gonflable (2) en conséquence de son allumage ;
une unité de commande et de gestion électronique centrale (8) qui est connectée fonctionnellement à ladite au moins une charge explosive (6) et à des moyens de capteur conçus pour mesurer les paramètres dynamiques et cinématiques dudit utilisateur (5) et d'une bicyclette (9) utilisée par ledit utilisateur (5) ; ladite unité de commande et de gestion électronique centrale (8) étant conçue pour comparer lesdits paramètres dynamiques pour un allumage commandé de ladite au moins une charge explosive (6) et lesdits moyens de capteur pouvant être associés en partie avec ledit utilisateur (5) et en partie avec ladite bicyclette (9).

2. Dispositif de protection personnelle (1a) selon la revendication 1, **caractérisé en ce que** ladite unité de commande et de gestion électronique centrale (8) est associée physiquement audit sac gonflable (2) pour son agencement dans ladite poche arrière centrale (3).

3. Dispositif de protection personnelle (1b) selon la revendication 1, **caractérisé en ce que** ladite unité de commande et de gestion électronique centrale (8) est configurée pour être associée à la selle (11) de ladite bicyclette (9) et est associée fonctionnellement à ladite charge explosive (6) à l'aide de moyens de télécommunication sans fil pour l'allumage à distance de ladite charge explosive (6).

4. Dispositif de protection personnelle (1a, 1b) selon la revendication 2 ou 3, **caractérisé en ce que** lesdits moyens de capteur comprennent au moins deux accéléromètres (10, 12), dont un premier accéléromètre (12) est associé directement audit sac gonflable (2) et un second accéléromètre (10) est configuré pour être associé à ladite selle (11) de ladite bicyclette (9), au moins un desdits accéléromètres (10, 12) étant associé fonctionnellement à ladite unité de commande et de gestion électronique centrale (8) à l'aide de moyens de télécommunication sans fil.

5. Dispositif de protection personnelle (1a) selon la revendication 4, **caractérisé en ce que** ledit sac gonflable (2) est pourvu de saillies latérales (7) qui sont formées à l'extrémité qui est opposée à l'extrémité conçue pour être insérée dans ladite poche arrière centrale (3) et sont conçues pour protéger les épaules dudit utilisateur (5).
